(19) Europäisches Patentamt
European Patent Office
Office européen des brevets

(11) EP 0 673 399 B1

(12) **EUROPÄISCHE PATENTSCHRIFT**

(45) Veröffentlichungstag und Bekanntmachung des Hinweises auf die Patenterteilung:
**12.03.1997 Patentblatt 1997/11**

(21) Anmeldenummer: **94902728.8**

(22) Anmeldetag: **09.12.1993**

(51) Int Cl.$^6$: **C08L 83/04**

(86) Internationale Anmeldenummer:
**PCT/EP93/03465**

(87) Internationale Veröffentlichungsnummer:
**WO 94/13741 (23.06.1994 Gazette 1994/14)**

(54) **ZU ELASTOMEREN VERNETZBARE ORGANOPOLYSILOXANMASSEN**

ORGANOPOLYSILOXANE MASSES CROSS-LINKABLE INTO ELASTOMERS

MATERIAUX CONSTITUES D'ORGANOPOLYSILOXANES ET TRANSFORMABLES PAR RETICULATION EN ELASTOMERES

(84) Benannte Vertragsstaaten:
**DE FR IT**

(30) Priorität: **10.12.1992 DE 4241713**

(43) Veröffentlichungstag der Anmeldung:
**27.09.1995 Patentblatt 1995/39**

(73) Patentinhaber: **Wacker-Chemie GmbH**
**81737 München (DE)**

(72) Erfinder:
• **KREIS, Gerhard**
**D-84489 Burghausen (DE)**

• **STEPP, Michael**
**D-84489 Burghausen (DE)**
• **MÜLLER, Johann**
**D-84489 Burghausen (DE)**

(74) Vertreter: **Deffner-Lehner, Maria et al**
**Wacker-Chemie GmbH,**
**Hanns-Seidel-Platz 4**
**81737 München (DE)**

(56) Entgegenhaltungen:
**EP-A- 0 567 253      WO-A-93/19122**

**Beschreibung**

Die Erfindung betrifft zu Elastomeren mittels Radikalbildung vernetzbare Organopolysiloxanmassen und ein Verfahren zu deren Herstellung.

Zu Elastomeren mittels Radikalbildung vernetzbare Massen auf Grundlage von hochviskosen Diorganopolysiloxanen und Füllstoffen, die durch Zugabe von organischen Peroxiden vernetzt werden, sind bekannt. Zur Erzielung von günstigen mechanischen Eigenschaften, wie gute Reißdehnung und Weiterreißfestigkeit, werden Mischungen von zwei bis drei verschiedenen Arten von hochviskosen Diorganopolysiloxanen mit unterschiedlichem Vinylgehalt und unterschiedlichen Siloxaneinheiten eingesetzt. Hierzu sei beispielsweise auf US-A 3,652,475 und US-A 3,660,345 verwiesen.

Die Verwendung von verschiedenen Arten von hochviskosen Diorganopolysiloxanen hat aber Nachteile bei der Logistik der Polymere und bei der Herstellung der Massen, insbesondere im kontinuierlichen Betrieb, da mehrere Dosierpumpen für die verschiedenen Polymere benötigt werden.

In US-A 2,803,619 sind zu Elastomeren mittels Radikalbildung vernetzbare Massen beschrieben, die vinylfreie Diorganopolysiloxane und vinylhaltige, lineare Organopolysiloxane mit mindestens 12 Siliciumatomen enthalten und Elastomere mit einem niedrigen Compression Set ergeben.

Es bestand die Aufgabe, zu Elastomeren mittels Radikalbildung vernetzbare Organopolysiloxanmassen bereitzustellen, die eine verminderte Anzahl von hochviskosen Diorganopolysiloxanen enthalten, mit denen die oben genannten Nachteile vermieden werden und mit denen Elastomere mit günstigen mechanischen Eigenschaften, wie guter Reißdehnung und Weiterreißfestigkeit, erhalten werden. Die aufgabe wird durch die Erfindung gelöst.

Gegenstand der Erfindung sind zu Elastomeren mittels Radikalbildung vernetzbare Organopolysiloxanmassen enthaltend

(1) hochviskose Diorganopolysiloxane mit einem im Brabender-Plastograph bei 23°C und 60 Umdrehungen je Minute bestimmten Wert von mindestens 3000 Nm
(2) niederviskose vinylhaltige Organopolysiloxane mit einer durchschnittlichen Viskosität von 20 bis $1\cdot10^6$ mPa·s bei 25°C aus Siloxaneinheiten (M-Einheiten) der Formeln

$$R^1R_2SiO_{1/2} \text{ und/oder } R_3SiO_{1/2} \text{ ,}$$

Siloxaneinheiten (D-Einheiten) der Formeln

$$R^1RSiO \text{ und/oder } R_2SiO \text{ und gegebenenfalls } HRSiO$$

und Siloxaneinheiten (T- bzw. Q-Einheiten) der Formeln

$$RSiO_{3/2} \text{ und/oder } R^1SiO_{3/2} \text{ und/oder } SiO_2 \text{ ,}$$

wobei R einen einwertigen, gegebenenfalls substituierten Kohlenwasserstoffrest mit 1 bis 18 Kohlenstoffatomen je Rest und
$R^1$ einen Vinylrest bedeutet,
mit der Maßgabe, daß die Organopolysiloxane mindestens 1,0 Gew.-% Si-gebundene Vinylgruppen enthalten, und
(3) Füllstoffe.

Gegenstand der Erfindung ist weiterhin ein Verfahren zur Herstellung der zu elastomeren mittels Radikalbildung vernetzbaren Organopolysiloxanmassen durch Vermischen von
(1) hochviskossen Diorganopolysiloxanen mit
(2) niederviskosen vinylhaltigen Organopolysiloxanen und
(3) Füllstoffen
sowie gegebenenfalls weiteren Stoffen.

Bei den erfindungsgemäßen Massen werden als (1) hochviskose Diorganopolysiloxane solche der allgemeinen Formel

$$R^1_z R_{3-z} SiO[R_2 SiO]_x [R^1 RSiO]_y SiR_{3-z} R^1_z \hspace{2cm} (I) ,$$

wobei R eine einwertigen, gegebenenfalls substituierten Kohlenwasserstoffrest mit bis 18 Kohlenstoffatomen je Rest,

$R^1$ einen Vinylrest,

z 0 oder 1,

x eine ganze Zahl und y 0 oder eine ganze Zahl bedeutet, wobei die Summe von x-y eine ganze Zahl mit einem solchen Wert ist, daß der im Brabender-Plastograph bei 22°C und 60 Umdrehungen je Minute bestimmte Wert mindestens 3000 Nm beträgt,

verwendet.

Obwohl in Formel (I) nicht angegeben, können bis zu 1 Mol% der Diorganopolysiloxaneinheiten durch andere, meist jedoch nur als mehr oder weniger schwer vermeidbare Verunreinigungen vorliegende Siloxaneinheiten, wie $R_3 SiO_{1/2}$-, $RSiO_{3/2}$- und $SiO_{4/2}$-Einheiten, ersetzt sein, wobei R die oben dafür angegebene Bedeutung hat.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl- und tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste R sind Cyanalkylreste, wie der β-Cyanethylrest, und halogenierte Kohlenwasserstoffreste, beispielsweise Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m- und p-Chlorphenylrest.

Schon wegen der leichteren Zugänglichkeit ist als Rest R der Methylrest bevorzugt.

Die bei den erfindungsgemäßen Massen eingesetzten hochviskosen Diorganopolysiloxane (1) besitzen vorzugsweise einen im Brabender-Plastograph bei 23°C und 60 Umdrehungen je Minute bestimmten Wert von 3000 bis 10000 Nm, bevorzugt 4500 bis 7500 Nm.

Die hochviskosen Diorganopolysiloxane (1) können frei von Si-gebundenen Vinylgruppen sein, d.h. in der Formel (I) hat z und y den Wert 0. Beispiele dafür sind Diorganopolysiloxane aus Dimethylsiloxan- und Trimethylsiloxaneinheiten.

Die hochviskosen Diorganopolysiloxane (1) können Si-gebundene Vinylgruppen enthalten. Die Vinylgruppen können sich dabei am Kettenende und/oder in der Kette befinden. Beispiele hierfür sind Diorganopolysiloxane mit Dimethylsiloxan- und Vinyldimethylsiloxaneinheiten, Diorganopolysiloxane mit Dimethylsiloxan-, Vinylmethylsiloxan- und Vinyldimethylsiloxaneinheiten und Diorganopolysiloxane mit Dimethylsiloxan-, Vinylmethylsiloxan- und Trimethylsiloxaneinheiten.

In den vinylhaltigen Diorganopolysiloxanen (1) sind die Vinylgruppen vorzugsweise in solchen Mengen enthalten, daß auf 500 bis 2000 Si-Atome je eine Vinylgruppe entfällt.

Bei den erfindungsgemäßen Massen wird bevorzugt eine Art von hochviskosem Diorganopolysiloxan (1) eingesetzt, was den Vorteil hat, daß die Zahl der eingesetzten hochviskosen Diorganopolysiloxane (1) von drei Diorganopolysiloxanen auf ein Diorganopolysiloxan reduziert wird. Dies schließt aber nicht aus, daß es sich bei den hochviskosen Diorganopolysiloxanen (1) herstellungsbedingt um Mischungen handelt. Wenn beispielsweise bei der Herstellung der hochviskosen Diorganopolysiloxane nach dem Verfahren gemäß US-A 4,725,643 bei der Endstopperung der Diorganopolysiloxane Hexamethyldisilazan und 1,3-Divinyl-1,1,3,3-tetramethyldisilazan eingesetzt wird, werden Mischungen von Diorganopolysiloxanen mit Trimethylsiloxyendgruppen und/oder Vinyldimethylsiloxyendgruppen erhalten.

Beispiele für niederviskose, vinylhaltige Organopolysiloxane (2), die bei den erfindungsgemäßen Massen eingesetzt werden, sind solche aus

$R^1 R_2 SiO_{1/2}$-, $R_2 SiO$-, $R^1 RSiO$- und $RSiO_{3/2}$-Einheiten,
$R^1 R_2 SiO_{1/2}$-, $R_2 SiO$-, $R^1 RSiO$- und $SiO_2$-Einheiten,
$R^1 R_2 SiO_{1/2}$-, $R_2 SiO$- und $RSiO_{3/2}$-Einheiten,
$R^1 R_2 SiO_{1/2}$-, $R_2 SiO$- und $SiO_2$-Einheiten,
$R_3 SiO_{1/2}$-, $R_2 SiO$-, $R^1 RSiO$- und $RSiO_{3/2}$-Einheiten,
$R_3 SiO_{1/2}$-, $R_2 SiO$-, $R^1 RSiO$- und $SiO_2$-Einheiten,

$R^1R_2SiO_{1/2}$-, $R_2SiO$-, $R^1RSiO$-, $HRSiO$- und $RSiO_{3/2}$-Einheiten,
$R^1R_2SiO_{1/2}$-, $R_2SiO$-, $R^1RSiO$-, $HRSiO$- und $SiO_2$-Einheiten und
$R^1R_2SiO_{1/2}$-, $R_2SiO$-, $R^1RSiO$- und $R^1SiO_{3/2}$-Einheiten,

wobei R und $R^1$ die oben dafür angegebene Bedeutung haben.

Bei den erfindungsgemäßen Massen werden als niederviskose vinylhaltige Organopolysiloxane (2) bevorzugt solche aus

$R^1R_2SiO_{1/2}$-, $R_2SiO$-, $R^1RSiO$- und $RSiO_{3/2}$-Einheiten,
$R^1R_2SiO_{1/2}$-, $R_2SiO$-, $R^1RSiO$- und $SiO_2$-Einheiten,
$R^1R_2SiO_{1/2}$-, $R_2SiO$- und $RSiO_{3/2}$-Einheiten oder
$R^1R_2SiO_{1/2}$-, $R_2SiO$- und $SiO_2$-Einheiten,

besonders bevorzugt aus

$R^1R_2SiO_{1/2}$-, $R_2SiO$-, $R^1RSiO$- und $RSiO_{3/2}$-Einheiten oder
$R^1R_2SiO_{1/2}$-, $R_2SiO$-, $R^1RSiO$- und $SiO_2$-Einheiten,

wobei R und $R^1$ die oben dafür angegebene Bedeutung haben, eingesetzt.

Siloxaneinheiten der Formel $R^1R_2SiO_{1/2}$ oder $R_3SiO_{1/2}$ werden als M-Einheiten, Siloxaneinheiten der Formel $R_2SiO$, $R^1RSiO$ oder $HRSiO$ als D-Einheiten, Siloxaneinheiten der Formel $RSiO_{3/2}$ oder $R^1SiO_{3/2}$ als T-Einheiten und Siloxaneinheiten der Formel $SiO_2$ als Q-Einheiten bezeichnet, wie das auch in der Fachliteratur üblich ist.

Vorzugsweise beträgt in den erfindungsgemäßen, niederviskosen vinylhaltigen Organopolysiloxanen (2), die aus M-, D- und T-Einheiten, bevorzugt aus $R^1R_2SiO_{1/2}$, $R_2SiO$, $R^1RSiO$ und $RSiO_{3/2}$, bestehen, das Verhältnis der T-Einheiten zu den M-Einheiten 1 : 5 bis 1 : 100, bevorzugt 1 : 6 bis 1 : 24, und das Verhältnis der T-Einheiten zu den D-Einheiten 1 : 100 bis 1 : 300, bevorzugt 1 : 200 bis 1 : 250. Bestehen die D-Einheiten aus $R_2SiO$- und $R^1RSiO$-Einheiten, so beträgt das Verhältnis der $R_2SiO$-Einheiten zu den $R^1RSiO$-Einheiten 1 : 0,025 bis 1 : 0,1.

Vorzugsweise beträgt in den erfindungsgemäßen, niederviskosen vinylhaltigen Organopolysiloxanen (2), die aus M-, D- und Q-Einheiten, bevorzugt aus $R^1R_2SiO_{1/2}$, $R_2SiO$, $R^1RSiO$ und $SiO_2$, bestehen, das Verhältnis der Q-Einheiten zu den M-Einheiten 1 : 5 bis 1 : 100, bevorzugt 1 : 6 bis 1 : 24, und das Verhältnis der Q-Einheiten zu den D-Einheiten 1 : 100 bis 1 : 300, bevorzugt 1 : 200 bis 1 : 250. Bestehen die D-Einheiten aus $R_2SiO$- und $R^1RSiO$-Einheiten, so beträgt das Verhältnis der $R_2SiO$-Einheiten zu den $R^1RSiO$-Einheiten 1 : 0,025 bis 1 : 0,1.

Die erfindungsgemäßen niederviskosen vinylhaltigen Organopolysiloxane (2) enthalten vorzugsweise 1,0 bis 10,3 Gew.-%, bevorzugt 1,0 bis 8,5 Gew.-%, Si-gebundene Vinylgruppen.

Die erfindungsgemäßen niederviskosen vinylhaltigen Organopolysiloxane (2) besitzen bevorzugt eine durchschnittliche Viskosität von 30 bis 1000 mPa·s bei 25°C.

In den erfindungsgemäßen Massen werden niederviskose vinylhaltige Organopolysiloxane (2) vorzugsweise in Mengen von 0,3 bis 12 Gew.-%, bevorzugt 0,3 bis 5,0 Gew.-%, bezogen auf das Gesamtgewicht der hochviskosen Diorganopolysiloxane (1), eingesetzt.

Es kann eine Art von Organopolysiloxan (2), es kann auch ein Gemisch aus mindestens zwei verschiedenen Arten von Organopolysiloxanen (2) eingesetzt werden.

Die Herstellung der niederviskosen, vinylhaltigen Organopolysiloxane (2) erfolgt nach bekannten Verfahren der Siliconchemie, beispielsweise durch Äquilibrierung von vinylhaltigen Organo(poly)siloxanen mit vinylfreien Organo(poly)siloxanen, wobei sowohl in den vinylhaltigen als auch in den vinylfreien Organo(poly)siloxanen T- und/oder Q-Einheiten vorhanden sein können, in Gegenwart von sauren oder basischen Katalysatoren, wie Benzyltrimethylammoniumhydroxid, Kaliumhydroxid, Schwefelsäure, Trifluormethansulfonsäure, Phosphornitridchloriden oder sauren Tonen, wie das im Handel erhältliche "Tonsil", oder durch Cohydrolyse oder Cokondensation von hydrolysierbaren Resten oder Hydroxygruppen aufweisenden Organo(poly)siloxanen und/oder Silanen (gegebenenfalls in Gegenwart von Hilfsbasen), wobei sowohl die eingesetzten Silane als auch die Organopolysiloxane Basis für die in den Endprodukten vorhandenen T- oder Q-Einheiten sein können.

Bei den erfindungsgemäßen Massen können als niederviskose, vinylhaltige Organopolysiloxane (2) solche eingesetzt werden, die neben Siloxaneinheiten mit Si-gebundenen Vinylgruppen auch Siloxaneinheiten mit Si-gebundenen Wasserstoffatomen enthalten, wobei sich Vorteile hinsichtlich verbesserter Hitzestabilität der Vulkanisate oder verbesserter Haftung der Vulkanisate auf anderen Substraten ergeben.

Da die Organopolysiloxane (2) niederviskose Flüssigkeiten sind und in geringen Mengen eingesetzt werden, sind sie leicht zu dosieren und einzumischen, was insbesondere beim kontinuierlichen Betrieb von Vorteil ist.

Beispiele für Füllstoffe (3) sind nicht verstärkende Füllstoffe, also Füllstoffe mit einer BET-Oberfläche von bis zu 50 $m^2/g$, wie Quarz, Diatomeenerde, Calciumsilikat, Zirkoniumsilikat, Zeolithe, Montmorrillonite, wie Bentonite, Metalloxidpulver, wie Aluminium-, Titan-, Eisen- oder Zinkoxide bzw. deren Mischoxide, Bariumsulfat, Calciumcarbonat, Gips, Nitride, wie Siliciumnitrid und Bornitrid, Carbide, wie Siliciumcarbid, Mischoxide mit Nitriden und/oder Carbiden, wie Siliciumoxynitrid, Glas- und Kunststoffpulver; verstärkende Füllstoffe, also Füllstoffe mit einer BET-Oberfläche von mehr als 50 m$^2$/g, wie Siliciumdioxid mit einer BET-Oberfläche von mindestens 50 m$^2$/g, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Asbest sowie Kunststoffasern. Die genannten Füllstoffe können hydrophobiert sein, beispielsweise durch die Behandlung mit Organosiliciumverbindungen, wie Hexamethyldisilazan, Organosilanen oder Organosiloxanen oder durch Verätherung von Hydroxylgruppen zu Alkoxygruppen. Es kann eine Art von Füllstoff, es kann auch ein Gemisch von mindestens zwei Füllstoffen eingesetzt werden.

Als Füllstoffe (3) werden bevorzugt pyrogen hergestellte Kieselsäuren und gefällte Kieselsäuren mit einer BET-Oberfläche von mindestens 50 m$^2$/g verwendet. Diese Füllstoffe sind bevorzugt hydrophobiert, wobei die Hydrophobierung der Füllstoffe vor dem Zusammenmischen der Bestandteile (1) bis (3) oder in Gegenwart der Diorganopolysiloxane (1), beispielsweise Behandlung von Siliciumdioxiden mit einer BET-Oberfläche von mindestens 50 m$^2$/g mit Hexamethyldisilazan in Gegenwart der hochviskosen Diorganopolysiloxane, wie in US-A 4,008,198 beschrieben, vorgenommen werden kann.

In den erfindungsgemäßen Massen werden Füllstoffe (3) in Mengen von 40 bis 60 Gew.-%, bezogen auf das Gesamtgewicht der Diorganopolysiloxane (1), eingesetzt.

Die erfindungsgemäßen Massen können zusätzlich zu den Bestandteilen (1) bis (3) herkömmlicherweise bei der Bereitung von zu Elastomeren mittels Radikalbildung vernetzbaren Massen mitverwendete Stoffe enthalten. Beispiele für derartige Stoffe sind Mittel zur Verhinderung der Verstrammung der Massen beim Lagern, wie niedermolekulare Siloxane mit Si-gebundenen Hydroxy- oder Alkoxygruppen oder Alkoxysilane, Pigmente, Antioxidantien, Hitzestabilisatoren, flammabweisend machende Mittel und Lichtschutzmittel.

Das erfindungsgemäße Verfahren zur Herstellung der zu Elastomeren mittels Radikalbildung vernetzbaren Massen kann absatzweise, halbkontinuierlich oder vollkontinuierlich durchgeführt werden.

Die Vernetzung der erfindungsgemäßen Massen erfolgt mittels freier Radikale. Als Quelle für freie Radikale sind Peroxide, insbesondere organische Peroxide (4), bevorzugt. Beispiele für solche organischen Peroxide sind Acylperoxide, wie Dibenzoylperoxid, Bis-(4-chlorbenzoyl)-peroxid, Bis(2,4-dichlorbenzoyl)-peroxid und Bis-(4-methylbenzoyl)-peroxid; Alkylperoxide und Arylperoxide, wie Di-tert.-butylperoxid, 2,5-Bis-(tert.-butylperoxy)-2,5-dimethylhexan, Dicumylperoxid und 1,3-Bis-(tert.-butylperoxy-isopropyl)-benzol; Perketale, wie 1,1-Bis-(tert.-butylperoxy)-3,3,5-trimethylcyclohexan; Perester, wie Diacetylperoxydicarbonat, tert.-Butylperbenzoat, Tert.-butylperoxy-isopropylcarbonat, Tert.-butylperoxy-isononanoat, Dicyclohexylperoxydicarbonat und 2,5-Dimethylhexan-2,5-diperbenzoat.

Es kann eine Art von organischem Peroxid (4), es kann auch ein Gemisch von mindestens zwei verschiedenen Arten von organischen Peroxiden (4) eingesetzt werden.

Vorzugsweise werden organische Peroxide (4) in Mengen von 0,35 bis 2,0 Gew.-%, bevorzugt 0,35 bis 1,5 Gew.-%, jeweils bezogen auf das Gesamtgewicht der Diorganopolysiloxane (1), in den erfindungsgemäßen Massen eingesetzt.

Enthalten die erfindungsgemäßen Massen Diorganopolysiloxane, die frei von Vinylgruppen sind, werden Elastomere mit guter Reißdehnung und guter Weiterreißfestigkeit erhalten. Enthalten die erfindungsgemäßen Massen Diorganopolysiloxane mit Vinylgruppen am Kettenende und/oder in der Kette, werden Elastomere erhalten, die zusätzlich einen verbesserten Rückprall und/oder einen niedrigen Compression Set aufweisen.

Die Vernetzung der erfindungsgemäßen Massen erfolgt vorzugsweise bei Temperaturen von 120°C bis 150°C.

Die endgültige Formgebung der erfindungsgemäßen Massen vor der Vernetzung zu Elastomeren kann in beliebiger für die Formgebung von zu Elastomeren vernetzbaren Massen auf Grundlage von hochviskosen Diorganopolysiloxanen geeigneter und vielfach bekannter Weise, z.B. durch Extrusion oder Pressformen, erfolgen.

Die erfindungsgemäßen Massen können für die Herstellung von Silicongummiplatten, -folien und -schläuchen sowie Pressformartikel jeglicher Art, z.B. O-Ringe oder Dichtungen, verwendet werden.

**Herstellung der niederviskosen vinylhaltigen Organopolysiloxane A bis F:**

**Organopolysiloxan A:**

Eine Mischung aus 1500 g eines durch Vinyldimethylsiloxygruppen endblockierten Dimethylpolysiloxans mit einer Viskosität von 1000 mPa·s bei 25°C, 85 g 1,3-Divinyl-1,1,3,3-tetramethyldisiloxan, 313 g Methylvinyldichlorsilan, 47 g Siliciumtetrachlorid und 3 ml einer 40 %igen Lösung von Phosphornitrilchloriden in Essigsäureethylester wurde bei 100°C eine Stunde lang gerührt und anschließend mit 500 g Wasser versetzt. Nach Einengen am Rotationsverdampfer bei 100°C und 8 mbar und Filtration über 50 g Bentonit/15 g Magnesiumoxid wurden 1594 g eines klaren farblosen Öls mit einer Viskosität von 80 mm$^2$·s$^{-1}$ bei 25°C erhalten, das gemäß $^{29}$Si- und $^1$H-NMR-Spektrum folgende Zusammensetzung aufweist:

$$[ViMe_2SiO_{1/2}]_4[ViMeSiO]_9[Me_2SiO]_{86}[SiO_2]$$

(Me=Methylrest, Vi=Vinylrest)

Das Organopolysiloxan A enthält 4,4 Gew.-% Si-gebundene Vinylgruppen.

**Organopolysiloxan B:**

Eine Mischung aus 4,32 g Tetrakis-(dimethylvinylsiloxy)-silan, 30,6 g eines Diorganopolysiloxans aus Dimethylsiloxan- und Methylvinylsiloxaneinheiten, wobei das Verhältnis von Dimethylsiloxan- zu Methylvinylsiloxaneinheiten 4 zu 1 beträgt, mit endständigen Hydroxylgruppen und einer Viskosität von 150 mm$^2$·s$^{-1}$ bei 25°C, 30 g eines Dimethylpolysiloxans mit endständigen Hydroxylgruppen und einer Viskosität von 50 mm$^2$·s$^{-1}$ und 0,15 ml einer 40 %igen Lösung von Phosphornitrilchloriden in Essigsäureethylester wurde unter Rühren zwei Stunde lang auf 120°C erhitzt. Anschließend wurde 1 ml einer konzentrierten wäßrigen Ammoniaklösung zugefügt und im Vakuum bis 100°C und 4 mbar ausgeheizt. Nach Filtration über 2 g Bentonit wurden 51,5 g eines klaren farblosen Öls mit einer Viskosität von 80 mm$^2$·s$^{-1}$ bei 25°C erhalten, das gemäß $^{29}$Si- und $^1$H-NMR-Spektrum folgende Zusammensetzung aufweist:

$$[ViMe_2SiO_{1/2}]_4[ViMeSiO]_9[Me_2SiO]_{69}[SiO_2]$$

(Me=Methylrest, Vi=Vinylrest)

**Organopolysiloxan C:**

Eine Mischung aus 1500 g eines durch Vinyldimethylsiloxygruppen endblockierten Dimethylpolysiloxans mit einer Viskosität von 1000 mPa·s bei 25°C, 74,4 g 1,3-Divinyl-1,1,3,3-tetramethyldisiloxan, 282 g Methylvinyldichlorsilan, 12,5 g Methyltrichlorsilan und 3 ml einer 40 %igen Lösung von Phosphornitrilchloriden in Essigsäureethylester wurde bei 100°C eine Stunde lang gerührt und anschließend mit 81 g Wasser versetzt. Nach Einengen am Rotationsverdampfer bei 100°C und 8 mbar und Filtration über 40 g Bentonit/10 g Magnesiumoxid wurden 1527 g eines klaren farblosen Öls mit einer Viskosität von 68 mm$^2$·s$^{-1}$ bei 25°C erhalten, das gemäß $^{29}$Si- und $^1$H-NMR-Spektrum folgende Zusammensetzung aufweist:

$$[ViMe_2SiO_{1/2}]_{9,4}[ViMeSiO]_{24}[Me_2SiO]_{226}[MeSiO_{3/2}].$$

(Me=Methylrest, Vi=Vinylrest)

**Organopolysiloxan D:**

Eine Mischung aus 444 g eines Dimethylpolysiloxans mit endständigen Hydroxylgruppen und einer Viskosität von 20000 mPa·s bei 25°C, 35,5 g 1,3-Divinyl-1,1,3,3-tetramethyldisiloxan, 211 g Methylvinyldichlorsilan, 15,3 g Siliciumtetrachlorid und 1,2 ml einer 40 %igen Lösung von Phosphornitrilchloriden in Essigsäureethylester wurde bei 100°C zwei Stunde lang gerührt und anschließend mit 121 g Wasser versetzt. Nach Einengen am Rotationsverdampfer bei 100°C und 5 mbar und Filtration über 10 g Kieselgel 60 (käuflich erwerblich bei der Fa. Merck) wurden 320 g eines klaren farblosen Öls mit einer Viskosität von 97 mm$^2$·s$^{-1}$ bei 25°C erhalten, das gemäß $^{29}$Si- und $^1$H-NMR-Spektrum folgende Zusammensetzung aufweist:

$$[ViMe_2SiO_{1/2}]_3[ViMeSiO]_{16}[Me_2SiO]_{62}[SiO_2]$$

(Me=Methylrest, Vi=Vinylrest)

Das Organopolysiloxan D enthält 8,1 Gew.-% Si-gebundene Vinylgruppen.

**Organopolysiloxan E:**

Eine Mischung aus 1355 g eines Dimethylpolysiloxans mit endständigen Hydroxylgruppen und einer Viskosität von 20000 mPa·s bei 25°C, 28,3 g Dimethylvinylchlorsilan, 66 g Methylvinyldichlorsilan, 11,7 g Methyltrichlorsilan und 1,2 ml einer 40 %igen Lösung von Phosphornitrilchloriden in Essigsäureethylester wurde bei 100°C zwei Stunde lang gerührt und anschließend mit 54 g Wasser versetzt. Nach Einengen am Rotationsverdampfer bei 100°C und 2 mbar und Filtration über 10 g Kieselgel 60 (käuflich erwerblich bei der Fa. Merck) wurden 1233 g eines klaren farblosen Öls mit einer Viskosität von 621 $mm^2 \cdot s^{-1}$ bei 25°C erhalten, das gemäß $^{29}$Si- und $^1$H-NMR-Spektrum folgende Zusammensetzung aufweist:

$$[ViMe_2SiO_{1/2}]_3[ViMeSiO]_6[Me_2SiO]_{246}[MeSiO_{3/2}]$$

(Me=Methylrest, Vi=Vinylrest)

Das Organopolysiloxan E enthält 1,3 Gew.-% Si-gebundene Vinylgruppen.

**Organopolysiloxan F:**

Eine Mischung aus 1420 g eines durch Vinyldimethylsiloxygruppen endblockierten Dimethylpolysiloxans mit einer Viskosität von 1000 mPa·s bei 25°C, 60 g eines durch Vinyldimethylsiloxygruppen endblockierten Dimethylpolysiloxans mit einer Viskosität von 12 $mm^2 \cdot s^{-1}$ bei 25°C, 230 g eines Diorganopolysiloxans aus Dimethylsiloxan- und Methylvinylsiloxaneinheiten, wobei das Verhältnis von Dimethylsiloxanzu Methylvinylsiloxaneinheiten 4 zu 1 beträgt, mit endständigen Hydroxylgruppen und einer Viskosität von 150 $mm^2 \cdot s^{-1}$ bei 25°C, 22 g Methyltriacetoxysilan und 2 ml einer 40 %igen Lösung von Phosphornitrilchloriden in Essigsäureethylester wurde bei 100°C eine Stunde lang gerührt. Anschließend wurden 20 ml einer 5 %igen wäßrigen Kaliumformiatlösung zugefügt und im Vakuum alle flüchtigen Bestandteile abdestilliert. Nach Filtration über eine Drucknutsche wurden 1670 g eines klaren farblosen Öls mit einer Viskosität von 591 $mm^2 \cdot s^{-1}$ bei 25°C erhalten, das gemäß $^{29}$Si- und $^1$H-NMR-Spektrum folgende Zusammensetzung aufweist:

$$[ViMe_2SiO_{1/2}]_3[ViMeSiO]_6[Me_2SiO]_{226}[MeSiO_{3/2}]$$

(Me=Methylrest, Vi=Vinylrest)

**Beispiele 1 bis 16:**

271 g des in den Tabellen 1 und 2 jeweils genannten Diorganopolysiloxans wurden in einem Kneter zunächst mit den in den Tabellen 1 und 2 jeweils angegebenen Mengen an 1,3-Divinyl-1,1,3,3-tetramethyldisilazan (Disilazan) und Wasser, dann mit dem in den Tabellen 1 und 2 jeweils genannten Organopolysiloxan in den jeweiligen Mengen und schließlich mit der in den Tabellen 1 und 2 jeweils angegebenen Menge an hydrophobem pyrogen erzeugtem Siliciumdioxid (HDK) mit einer BET-Oberfläche von 300 $m^2$/g, wobei die Hydrophobierung vor dem Zusammenmischen der Bestandteile mit Hexamethyldisiloxan in der Flüssigphase erfolgte, vermischt. Die Mischung wurde im Kneter jeweils drei Stunden lang bei 150°C gemischt und ausgeheizt.

Ein Teil der Mischung wurde jeweils mit einer Paste aus gleichen Teilen Bis-(2,4-dichlorbenzoyl)-peroxid (= Peroxid 1) und eines durch Trimethylsiloxygruppen endblockierten Dimethylpolysiloxans mit einer Viskosität von 250 mPa·s bei 25°C in einer Menge von 1,5 Gew.-% vermischt. Aus dieser Mischung wurden jeweils durch Vulkanisation bei 135°C in 10 Minuten Platten mit einer Stärke von 2 mm hergestellt. Die Platten wurden anschließend jeweils vier Stunden lang bei 200°C getempert.

Der andere Teil der Mischung wurde jeweils mit Dicumylperoxid (= Peroxid 2) in einer Menge von 0,7 Gew.-% vermischt. Aus dieser Mischung wurden jeweils durch Vulkanisation bei 165°C in 10 Minuten Platten mit einer Stärke von 2 mm hergestellt. Die Platten wurden anschließend jeweils vier Stunden lang bei 200°C getempert.

Die mechanischen Werte der Elastomeren wurden bestimmt und die Ergebnisse sind in den Tabellen 3 bis 6 zusammengefaßt. Die Shore-A-Härte wurde nach DIN 53 505, die Reißfestigkeit, die Reißdehnung und der Spannungswert (Modul) bei 100 % bzw. 300 % Dehnung nach DIN 53 504 mit Normstab S 3A, der Weiterreißwert nach ASTM D 624 B, der Rückprall nach DIN 53 512, der Compression Set nach DIN 53 517 und die Mooney-Viskosität nach DIN 53 523 bei 23°C bestimmt.

**Vergleichsversuch 1:**

Eine Mischung aus 751 g eines durch Vinyldimethylsiloxygruppen endblockierten Diorganopolysiloxans aus Dimethylsiloxan- und Vinylmethylsiloxaneinheiten, wobei an jedes 1200.ste Si-atom eine Vinylgruppe gebunden ist, mit einem im Brabender-Plastograph bei 23°C und 60 Umdrehungen je Minute bestimmten Wert von 5800 Nm, 268 g eines durch Trimethylsiloxygruppen endblockierten Dimethylpolysiloxans mit einem im Brabender-Plastograph bei 23°C und 60 Umdrehungen je Minute bestimmten Wert von 6000 Nm und 53,5 g eines durch Trimethylsiloxygruppen endblockierten Diorganopolysiloxans aus Dimethylsiloxan- und Vinylmethylsiloxaneinheiten, wobei an jedem 5.ten Si-atom eine Vinylgruppe gebundenen ist, mit einem im Brabender-Plastograph bei 23°C und 60 Umdrehungen je Minute bestimmten Wert von 4000 Nm, wurde in einem Kneter mit 450,5 g hydrophobem pyrogen hergestelltem Siliciumdioxid mit einer BET-Oberfläche von 300 m$^2$/g, wobei die Hydrophobierung vor dem Zusammenmischen der Bestandteile mit Hexamethyldisilazan in der Gasphase erfolgte, vermischt.

Die so erhaltene Mischung wurde, wie in Beispiel 1 beschrieben, mit den organischen Peroxiden vermischt und vulkanisiert und die so erhaltenen Vulkanisate wurden anschließend getempert. Die mechanischen Werte wurden, wie in Beispiel 1 beschrieben, bestimmt. Die Ergebnisse sind in Tabelle 3 zusammengefaßt.

**Vergleichsversuch 2 (US-A 2,803,619):**

Die Arbeitsweise von Beispiel 16 wurde wiederholt mit der Abänderung, daß 7,65 g eines linearen vinylhaltigen Dimethylpolysiloxans der Formel

$$H_2C=CH(CH_3)_2SiO[Si(CH_3)_2O]_{10}Si(CH_3)_2CH=CH_2$$

anstelle der 8,7 g des Organopolysiloxans A eingesetzt wurden.

Die so erhaltene Mischung wurde, wie in Beispiel 16 beschrieben, mit den organischen Peroxiden vermischt und vulkanisiert und die so erhaltenen Vulkanisate wurden anschließend getempert. Die mechanischen Werte wurden, wie in Beispiel 16 beschrieben, bestimmt. Die Ergebnisse sind in Tabelle 7 zusammengefaßt.

Tabelle 1:

| Beispiel | 1 | 2 | 3 | 4 | 5 | 6 | 7 | 8 |
|---|---|---|---|---|---|---|---|---|
| Diorganopolysiloxan-Art | I | II | III | I | II | III | I | I |
| Organopolysiloxan-Art | A | A | A | C | C | C | A | C |
| Organopolysiloxan-Menge[g] | 8,7 | 8,7 | 8,7 | 8,68 | 8,86 | 8,68 | 13,05 | 13,00 |
| Disilazan [g] | 2,5 | 2,5 | 2,5 | 2,5 | 2,68 | 2,68 | 2,5 | 2,5 |
| Wasser [g] | 0,55 | 0,55 | 0,55 | 0,55 | 0,55 | 0,55 | 0,55 | 0,55 |
| HDK [g] | 150 | 150 | 150 | 150 | 150 | 150 | 150 | 150 |

Tabelle 2:

| Beispiel | 9 | 10 | 11 | 12 | 13 | 14 | 15 | 16 |
|---|---|---|---|---|---|---|---|---|
| Diorganopolysiloxan-Art | IV | IV | IV | IV | V | VI | VII | I |
| Organopolysiloxan-Art | A | C | D | E | C | C | C | A |
| Organopolysiloxan-Menge[g] | 2,0 | 1,53 | 1,2 | 7,0 | 8,7 | 8,7 | 8,7 | 8,7 |
| Disilazan [g] | 2,71 | 2,71 | 2,71 | 2,71 | 2,71 | 2,71 | 2,71 | 2,5 |
| Wasser [g] | 0,6 | 0,6 | 0,6 | 0,6 | 0,6 | 0,6 | 0,6 | 0,55 |
| HDK [g] | 150 | 150 | 130 | 130 | 150 | 150 | 150 | 150 |

**Diorganopolysiloxan I:**

Durch Trimethylsiloxygruppen endblockiertes Dimethylpolysiloxan mit einem im Brabender-Plastograph bei 23°C und 60 Umdrehungen je Minute bestimmten Wert von 6000 Nm. Der Brabender-Wert ist ein Maß für die Viskosität der Diorganopolysiloxane.

**Diorganopolysiloxan II:**

Durch Vinyldimethylsiloxygruppen endblockiertes Dimethylpolysiloxan mit einem im Brabender-Plastograph bei 23°C und 60 Umdrehungen je Minute bestimmten Wert von 6500 Nm.

**Diorganopolysiloxan III:**

Durch Vinyldimethylsiloxygruppen endblockiertes Diorganopolysiloxan aus Dimethylsiloxan- und Vinylmethylsiloxaneinheiten, wobei an jedes 1200.ste Si-atom eine Vinylgruppe gebunden ist, mit einem im Brabender-Plastograph bei 23°C und 60 Umdrehungen je Minute bestimmten Wert von 5800 Nm.

**Diorganopolysiloxan IV:**

Durch Vinyldimethylsiloxygruppen endblockiertes Diorganopolysiloxan aus Dimethylsiloxan- und Vinylmethylsiloxaneinheiten, wobei an jedes 500.ste Si-atom eine Vinylgruppe gebunden ist, mit einem im Brabender-Plastograph bei 23°C und 60 Umdrehungen je Minute bestimmten Wert von 5500 Nm.

**Diorganopolysiloxan V:**

Durch Trimethylsiloxygruppen endblockiertes Diorganopolysiloxan aus Dimethylsiloxan- und Vinylmethylsiloxaneinheiten, wobei an jedes 2000.ste Si-atom eine Vinylgruppe gebunden ist, mit einem im Brabender-Plastograph bei 23°C und 60 Umdrehungen je Minute bestimmten Wert von 6300 Nm.

**Diorganopolysiloxan VI:**

Durch Trimethylsiloxygruppen endblockiertes Diorganopolysiloxan aus Dimethylsiloxan- und Vinylmethylsiloxaneinheiten, wobei an jedes 1000.ste Si-atom eine Vinylgruppe gebunden ist, mit einem im Brabender-Plastograph bei 23°C und 60 Umdrehungen je Minute bestimmten Wert von 6500 Nm.

**Diorganopolysiloxan VII:**

Mischung aus durch Trimethylsiloxygruppen und/oder Vinyldimethylsiloxygruppen endblockierte Diorganopolysiloxane aus Dimethylsiloxan- und Vinylmethylsiloxaneinheiten, wobei an jedes 1400.ste Si-atom eine Vinylgruppe gebunden ist, mit einem im Brabender-Plastograph bei 23°C und 60 Umdrehungen je Minute bestimmten Wert von 6000 Nm, welche herstellungsbedingt erhalten wird durch Endstopperung der Diorganopolysiloxane mit einer Mischung aus Hexamethyldisilazan und 1,3-Divinyl-1,1,3,3-tetramethyldisilazan gemäß US-A 4,725,643.

Tabelle 3:

| Beispiel | Vergleichsversuch 1 | | 1 | | 2 | | 3 | |
|---|---|---|---|---|---|---|---|---|
| Peroxid | 1 | 2 | 1 | 2 | 1 | 2 | 1 | 2 |
| Shore-A Härte | 45 | 46 | 49 | 50 | 52 | 55 | 52 | 55 |
| Reißfestigkeit N/mm$^2$ | 8,9 | 9,8 | 9,9 | 9,8 | 10,5 | 9,6 | 10,3 | 10,7 |
| Modul 100 % | 1,3 | 1,0 | 1,5 | 1,2 | 1,5 | 1,3 | 1,6 | 1,4 |
| Modul 300 % | 3,7 | 2,4 | 4,4 | 3,2 | 4,8 | 4,0 | 5,0 | 4,2 |
| Reißdehnung % | 620 | 790 | 610 | 740 | 560 | 550 | 530 | 580 |
| Weiterreißwert N/mm | 33,3 | 34,6 | 42,7 | 49,1 | 33,1 | 38,0 | 31,9 | 34,8 |
| Rückprall % | 49 | 48 | 42 | 39 | 49 | 48 | 48 | 49 |
| Compression-Set % | 30/31 | 22/23 | 16/17 | 31/31 | 25/25 | 16/17 | 22/22 | 25/26 |
| Mooney-Viskosität | 36/34 | | 46/44 | | 53/46 | | 45/41 | |

Tabelle 4:

| Beispiel | 4 | | 5 | | 6 | | 7 | |
|---|---|---|---|---|---|---|---|---|
| Peroxid | 1 | 2 | 1 | 2 | 1 | 2 | 1 | 2 |
| Shore-A Härte | 48 | 46 | 54 | 57 | 54 | 59 | 50 | 54 |
| Reißfestigkeit N/mm$^2$ | 10,3 | 10,0 | 10,2 | 11,7 | 11,0 | 10,4 | 9,9 | 9,8 |
| Modul 100 % | 1,3 | 1,0 | 1,7 | 1,6 | 1,7 | 1,8 | 1,4 | 1,5 |
| Modul 300 % | 4,2 | 2,7 | 5,6 | 4,8 | 5,7 | 5,5 | 4,2 | 3,8 |
| Reißdehnung % | 640 | 810 | 480 | 570 | 510 | 490 | 660 | 700 |
| Weiterreißwert N/mm | 42,3 | 51,0 | 32,7 | 35,0 | 33,2 | 37,7 | 42,8 | 48,7 |
| Rückprall % | 41 | 36 | 50 | 51 | 50 | 53 | 40 | 40 |
| Compression-Set % | 32/32 | 20/20 | 24/25 | 12/12 | 23/24 | 10/12 | 34/33 | 22/21 |
| Mooney-Viskosität | 45/43 | | 52/50 | | 41/39 | | 48/46 | |

Tabelle 5:

| Beispiel | 8 | | 9 | | 10 | | 11 | |
|---|---|---|---|---|---|---|---|---|
| Peroxid | 1 | 2 | 1 | 2 | 1 | 2 | 1 | 2 |
| Shore-A Härte | 48 | 51 | 51 | 55 | 51 | 55 | 48 | 50 |
| Reißfestigkeit N/mm$^2$ | 9,1 | 9,4 | 10,0 | 10,5 | 9,8 | 9,6 | 9,3 | 8,9 |
| Modul 100 % | 1,4 | 1,3 | 1,5 | 1,6 | 1,5 | 1,7 | 1,3 | 1,3 |
| Modul 300 % | 4,1 | 3,5 | 6,1 | 6,6 | 6,3 | 6,9 | 5,1 | 5,3 |
| Reißdehnung % | 610 | 690 | 440 | 420 | 420 | 380 | 470 | 440 |
| Weiterreißwert N/mm | 44,0 | 51,2 | 20,4 | 21,8 | 20,3 | 21,2 | 21,2 | 22,4 |
| Rückprall % | 40 | 39 | 53 | 55 | 54 | 54 | 53 | 52 |
| Compression-Set % | 31/32 | 23/23 | 18/18 | 6/4 | 20/19 | 11/9 | 16/17 | 8/9 |
| Mooney-Viskosität | 47/43 | | 41/39 | | 39/37 | | 40/37 | |

Tabelle 6:

| Beispiel | 12 | | 13 | | 14 | | 15 | |
|---|---|---|---|---|---|---|---|---|
| Peroxid | 1 | 2 | 1 | 2 | 1 | 2 | 1 | 2 |
| Shore-A Härte | 49 | 54 | 51 | 51 | 51 | 51 | 52 | 54 |
| Reißfestigkeit N/mm$^2$ | 9,4 | 8,0 | 10,0 | 10,2 | 9,9 | 9,7 | 10,6 | 11,6 |
| Modul 100 % | 1,6 | 1,8 | 1,6 | 1,3 | 1,6 | 1,3 | 1,6 | 1,5 |
| Modul 300 % | 5,7 | 6,8 | 5,1 | 3,8 | 5,0 | 4,1 | 5,1 | 5,4 |
| Reißdehnung % | 430 | 350 | 540 | 650 | 540 | 600 | 550 | 620 |
| Weiterreißwert N/mm | 21,3 | 21,9 | 36,8 | 44,7 | 35,3 | 42,0 | 36,2 | 37,4 |
| Rückprall % | 53 | 57 | 44 | 40 | 45 | 45 | 47 | 47 |
| Compression-Set % | 12/14 | 5/6 | 31/31 | 20/22 | 28/28 | 19/19 | 26/26 | 15/15 |
| Mooney-Viskosität | 39/37 | | 61/54 | | 66/59 | | 54/50 | |

Tabelle 7:

| Beispiel | 16 | | Vergleichsversuch 2 | |
|---|---|---|---|---|
| Peroxid | 1 | 2 | 1 | 2 |
| Shore-A Härte | 56 | 55 | 49 | 49 |
| Reißfestigkeit N/mm$^2$ | 10,8 | 9,5 | 10,8 | 10,6 |
| Modul 100 % | 1,8 | 1,6 | 1,4 | 1,2 |
| Modul 300 % | 5,1 | 3,8 | 4,6 | 3,3 |
| Reißdehnung % | 590 | 650 | 560 | 670 |
| Weiterreißwert N/mm | 45,1 | 48,6 | 37,2 | 44,3 |
| Rückprall % | 40 | 38 | 36 | 33 |
| Compression-Set % | 33/32 | 28/28 | 38/38 | 27/30 |
| Mooney-Viskosität | 63/57 | | 67/61 | |

Ein Vergleich der Ergebnisse des Beispiels 16 und des Vergleichsversuchs 2 zeigt, daß das Vulkanisat gemäß Beispiel 16 gegenüber dem Vulkanisat gemäß Vergleichsversuch 2 eine höhere Shore-Härte, d.h. eine höhere Vernetzungsdichte, höhere Werte für das Modul 100 % und Modul 300 %, d.h. eine höhere Vernetzungsdichte und eine höhere Elastizität, eine bessere Weiterreißfestigkeit, einen höheren Rückprall und damit eine bessere Elasitizität, einen niedrigeren Compression Set bei Verwendung des Peroxids 1 und eine niedrigere Mooney-Viskosität aufweist.

**Patentansprüche**

1. Zu Elastomeren mittels Radikalbildung vernetzbare Organopolysiloxanmassen enthaltend

(1) hochviskose Diorganopolysiloxane mit einem im Brabender-Plastograph bei 23°C und 60 Umdrehungen je Minute bestimmten Wert von mindestens 3000 Nm,
(2) niederviskose vinylhaltige Organopolysiloxane mit einer durchschnittlichen Viskosität von 20 bis $1 \cdot 10^6$ mPa·s bei 25°C

aus Siloxaneinheiten (M-Einheiten) der Formeln

$$R^1 R_2 SiO_{1/2} \text{ und/oder } R_3 SiO_{1/2} ,$$

Siloxaneinheiten (D-Einheiten) der Formeln

$$R^1 RSiO \text{ und/oder } R_2 SiO \text{ und gegebenenfalls } HRSiO$$

und Siloxaneinheiten (T- bzw. Q-Einheiten) der Formeln

$$RSiO_{3/2} \text{ und/oder } R^1 SiO_{3/2} \text{ und/oder } SiO_2$$

wobei R einen einwertigen, gegebenenfalls substituierten Kohlenwasserstoffrest mit 1 bis 18 Kohlenstoffatomen je Rest und
$R^1$ einen Vinylrest bedeutet,
mit der Maßgabe, daß die Organopolysiloxane mindestens 1,0 Gew.-% Si-gebundene Vinylgruppen enthalten, und

(3) Füllstoffe.

**2.** Massen nach Anspruch 1, dadurch gekennzeichnet, daß als (1) hochviskose Diorganopolysiloxane solche der allgemeinen Formel

$$R_z^1 R_{3-z} SiO[R_2 SiO]_x [R^1 RSiO]_y SiR_{3-z} R_z^1 \qquad (I),$$

wobei R einen einwertigen, gegebenenfalls substituierten Kohlenwasserstoffrest mit 1 bis 18 Kohlenstoffatomen je Rest,

R$^1$ einen Vinylrest,
z 0 oder 1,
x eine ganze Zahl und y 0 oder eine ganze Zahl bedeutet, wobei die Summe von x+y eine ganze Zahl mit einem solchen Wert ist, daß der im Brabender-Plastograph bei 23°C und 60 Umdrehungen je Minute bestimmte Wert mindestens 3000 Nm beträgt,

verwendet werden.

**3.** Massen nach Anspruch 1 oder 2, dadurch gekennzeichnet, daß als (2) niederviskose, vinylhaltige Organopolysiloxane solche aus

R$^1$R$_2$SiO$_{1/2}$-, R$_2$SiO-, R$^1$RSiO- und RSiO$_{3/2}$-Einheiten oder
R$^1$R$_2$SiO$_{1/2}$-, R$_2$SiO-, R$^1$RSiO- und SiO$_2$-Einheiten,

wobei R einen einwertigen, gegebenenfalls substituierten Kohlenwasserstoffrest mit 1 bis 18 Kohlenstoffatomen je Rest und
R$^1$ einen Vinylrest bedeutet,
verwendet werden.

**4.** Massen nach Anspruch 1, 2 oder 3, dadurch gekennzeichnet, daß die Massen als Radikale bildende Mittel (4) organische Peroxide enthalten.

**5.** Massen nach einem der Ansprüche 1 bis 4, dadurch gekennzeichnet, daß niederviskose vinylhaltige Organopolysiloxane (2) in Mengen von 0,3 bis 12 Gew.-%, bezogen auf das Gesamtgewicht der eingesetzten hochviskosen Diorganopolysiloxane (1), eingesetzt werden.

**6.** Verfahren zur Herstellung der Massen nach einem der Ansprüche 1 bis 5, dadurch gekennzeicnnet, daß

(1) hochviskose Diorganopolysiloxane mit einem im Brabender-Plastograph bei 23°C und 60 Umdrehungen je Minute bestimmten Wert von mindestens 3000 Nm mit
(2) niederviskosen vinylhaltigen Organopolysiloxanen mit einer durchschnittlichen Viskosität von 20 bis 1·10$^6$ mPa·s bei 25°C

aus Siloxaneinheiten (M-Einheiten) der Formeln

$$R^1 R_2 SiO_{1/2} \qquad und/oder \qquad R_3 SiO_{1/2} \,,$$

Siloxaneinheiten (D-Einheiten) der Formeln

$$R^1 RSiO \ und/oder \ R_2 SiO \ und \ gegebenenfalls \ HRSiO$$

und Siloxaneinheiten (T- bzw. Q-Einheiten) der Formeln

$$RSiO_{3/2} \ und/oder \ R^1 SiO_{3/2} \ und/oder \ SiO_2 \,,$$

wobei R einen einwertigen, gegebenenfalls substituierten Kohlenwasserstoffrest mit 1 bis 18 Kohlenstoffatomen je Rest und

$R^1$ einen Vinylrest bedeutet,

mit der Maßgabe, daß die Organopolysiloxane mindestens 1,0 Gew.-% Si-gebundene Vinylgruppen enthalten, und

(3) Füllstoffen

sowie gegebenenfalls weiteren Stoffen vermischt werden.

## Claims

1. Organopolysiloxane compositions which can be crosslinked by means of free radical formation to give elastomers and comprise

    (1) high-viscosity diorganopolysiloxanes having a value of at least 3000 Nm determined in a Brabender Plastograph at 23°C and 60 revolutions per minute,

    (2) low-viscosity vinyl-containing organopolysiloxanes having an average viscosity of 20 to $1 \times 10^6$ mPa·s at 25°C, consisting of siloxane units (M units) of the formulae

$$R^1 R_2 SiO_{1/2} \qquad \text{and/or} \qquad R_3 SiO_{1/2},$$

siloxane units (D units) of the formulae

$$R^1 RSiO \qquad \text{and/or } R_2 SiO \qquad \text{and if appropriate HRSiO}$$

and siloxane units (T and Q units) of the formulae

$$RSiO_{3/2} \qquad \text{and/or} \qquad R^1 SiO_{3/2} \qquad \text{and/or} \qquad SiO_2$$

in which R is a monovalent, unsubstituted or substituted hydrocarbon radical having 1 to 18 carbon atoms per radical and

$R^1$ is a vinyl radical,

with the proviso that the organopolysiloxanes contain at least 1.0% by weight of Si-bonded vinyl groups, and

    (3) fillers.

2. Compositions according to Claim 1, characterized in that the high-viscosity diorganopolysiloxanes used as (1) are those of the general formula

$$R^1_z R_{3-z} SiO[R_2 SiO]_x [R^1 RSiO]_y SiR_{3-z} R^1_z \qquad \text{(I)}$$

in which R is a monovalent, unsubstituted or substituted hydrocarbon radical having 1 to 18 carbon atoms per radical,

$R^1$ is a vinyl radical,

z is 0 or 1,

x is an integer and y is 0 or an integer,

and wherein the sum of x+y is an integer having a value such that the value determined in the Brabender Plastograph at 23°C and 60 revolutions per minute is at least 3000 Nm.

3. Compositions according to Claim 1 or 2, characterized in that the low-viscosity, vinyl-containing organopolysiloxanes used as (2) are those of

$R^1R_2SiO_{1/2}$-, $R_2SiO$-, $R^1RSiO$- and $RSiO_{3/2}$ units or
$R^1R_2SiO_{1/2}$-, $R_2SiO$-, $R^1RSiO$- and $SiO_2$ units,

in which R is a monovalent, unsubstituted or substituted hydrocarbon radical having 1 to 18 carbon atoms per radical and
$R^1$ is a vinyl radical.

4. Compositions according to Claim 1, 2 or 3, characterized in that the compositions comprise, as an agent which forms free radicals,
(4) an organic peroxide.

5. Compositions according to one of Claims 1 to 4, characterized in that low-viscosity vinyl-containing organopolysiloxanes (2) are employed in amounts of 0.3 to 12% by weight, based on the total weight of the high-viscosity diorganopolysiloxanes (1) employed.

6. Process for the preparation of the compositions according to one of Claims 1 to 5, characterized in that

(1) high-viscosity diorganopolysiloxanes having a value of at least 3000 Nm determined in a Brabender Plastograph at 23°C and 60 revolutions per minute are mixed with
(2) low-viscosity vinyl-containing organopolysiloxanes having an average viscosity of 20 to $1 \times 10^6$ mPa·s at 25°C, consisting of siloxane units (M units) of the formulae

$$R^1R_2SiO_{1/2} \qquad \text{and/or} \qquad R_3SiO_{1/2},$$

siloxane units (D units) of the formulae

$$R^1RSiO \text{ and/or } R_2SiO \text{ and if appropriate } HRSiO$$

and siloxane units (T and Q units) of the formulae

$$RSiO_{3/2} \qquad \text{and/or} \qquad R^1SiO_{3/2} \text{ and/or } SiO_2$$

in which R is a monovalent, unsubstituted or substituted hydrocarbon radical having 1 to 18 carbon atoms per radical and

$R^1$ is a vinyl radical,
with the proviso that the organopolysiloxanes contain at least 1.0% by weight of Si-bonded vinyl groups, and

(3) fillers,

and if appropriate further substances.

**Revendications**

1. Compositions d'organopolysiloxanes réticulables en élastomères par formation radicalaire, comprenant

(1) des diorganopolysiloxanes fortement visqueux ayant une valeur d'au moins 3000 Nm déterminée dans un plastographe de Brabender à 23°C et à 60 tours par minute,

(2) des organopolysiloxanes vinyliques faiblement visqueux ayant une viscosité moyenne de 20 à 1×10$^6$ mPa. s à 25°C, constitués de motifs siloxane (motifs M) de formules

$$R^1R_2SiO_{1/2} \quad \text{et/ou} \quad R_3SiO_{1/2},$$

de motifs siloxane (motifs D) de formules

$$R^1RSiO \text{ et/ou } R_2SiO \text{ et éventuellement } HRSiO$$

et de motifs siloxane (motifs T ou Q) de formules

$$RSiO_{3/2} \text{ et/ou } R^1SiO_{3/2} \text{ et/ou } SiO_2,$$

dans lesquelles R représente un radical hydrocarbure monovalent, éventuellement substitué, ayant 1 à 18 atomes de carbone par radical et

R$^1$ représente un radical vinylique,
sous réserve que les organopolysiloxanes contiennent au moins 1,0% en poids de groupes vinyliques liés à Si, et

(3) des charges.

2. Compositions selon la revendication 1, caractérisées en ce qu'on utilise en tant que diorganopolysiloxanes fortement visqueux selon (1), ceux de formule générale

$$R^1_z R_{3-z}SiO[R_2SiO]_x[R^1RSiO]_y SiR_{3-z}R^1_z \qquad (I),$$

dans laquelle R représente un radical hydrocarbure monovalent, éventuellement substitué, ayant 1 à 18 atomes de carbone par radical,

R$^1$ représente un radical vinylique,
z représente 0 ou 1,
x représente un entier et y représente 0 ou un entier,

dans laquelle la somme x+y est un entier d'une valeur telle que la valeur déterminée dans un plastographe de Brabender à 23°C et à 60 tours par minute s'élève au moins à 3000 Nm.

3. Compositions selon la revendication 1 ou 2, caractérisées en ce qu'on utilise en tant qu'organopolysiloxanes vinyliques faiblement visqueux selon (2), ceux parmi

les motifs $R^1R_2SiO_{1/2}$, $R_2SiO$, $R^1RSiO$, et $RSiO_{3/2}$ ou
les motifs $R^1R_2SiO_{1/2}$, $R_2SiO$, $R^1RSiO$, et $SiO_2$

dans lesquels R représente un radical hydrocarbure monovalent, éventuellement substitué, ayant 1 à 18 atomes de carbone par radical, et
R$^1$ représente un radical vinylique.

4. Compositions selon la revendication 1, 2 ou 3, caractérisées en ce que les compositions contiennent (4) des peroxydes organiques en tant qu'agents de formation de radicaux libres.

5. Compositions selon l'une quelconque des revendications 1 à 4, caractérisées en ce que l'on utilise des organopolysiloxanes vinyliques faiblement visqueux (2) dans des quantités de 0,3 à 12% en poids, basées sur le poids total des diorganopolysiloxanes fortement visqueux (1) utilisés.

6. Procédé de préparation des compositions selon l'une quelconque des revendications 1 à 5, caractérisé en ce que l'on mélange

(1) des diorganopolysiloxanes fortement visqueux ayant une valeur d'au moins 3000 Nm déterminée dans un plastographe de Brabender à 23°C et à 60 tours par minute, avec

(2) des organopolysiloxanes vinyliques faiblement visqueux ayant une viscosité moyenne de 20 à $1\times10^6$ mPa.s à 25°C, constitués de motifs siloxane (motifs M) de formules

$$R^1R_2SiO_{1/2} \qquad \text{et/ou} \qquad R_3SiO_{1/2},$$

de motifs siloxane (motifs D) de formules

$$R^1RSiO \text{ et/ou } R_2SiO \text{ et éventuellement } HRSiO$$

et de motifs siloxane (motifs T ou Q) de formules

$$RSiO_{3/2} \text{ et/ou } R^1SiO_{3/2} \text{ et/ou } SiO_2,$$

dans lesquelles R représente un radical hydrocarbure monovalent, éventuellement substitué, ayant 1 à 18 atomes de carbone par radical et

$R^1$ représente un radical vinylique,
sous réserve que les organopolysiloxanes contiennent au moins 1,0% en poids de groupes vinyliques liés à Si, et

(3) des charges

ainsi que, le cas échéant, d'autres substances.